# EUROPÄISCHE PATENTANMELDUNG

(11) **EP 1 655 507 A1**
(43) Veröffentlichungstag der Anmeldung: **10.05.2006**
(21) Anmeldenummer: 05109433.2
(22) Anmeldetag: 11.10.2005
(51) Int. Cl.: F16D 69/04

(54) **Reibbremsbelag für eine Scheibenbremse und Bremssattel mit einem derartigen Reibbremsbelag**

(30) Priorität: 09.11.2004 DE 102004054012
(71) Anmelder: ROBERT BOSCH GMBH, 70442 Stuttgart (DE)
(72) Erfinder: Baumann, Dietmar, 71282, Hemmingen (DE); Hofmann, Dirk, 71636, Ludwigsburg (DE); Vollert, Herbert, 71665, Vaihingen/Enz (DE); Nagel, Willi, 71686, Remseck/Hochdorf (DE); Henke, Andreas, 34474, Diemelstadt (DE); Foitzik, Bertram, 71636, Ludwigsburg (DE); Goetzelmann, Bernd, 71696, Moeglingen (DE)

(57) **Zusammenfassung**

Die Erfindung betrifft einen Reibbremsbelag (14, 16) mit einem Belagträger (18, 20) für eine Scheibenbremse (10). Die Erfindung schlägt vor, den Belagträger (18, 20) mit einem umlaufenden Rand (22, 24) und / oder mit Sicken (26, 28) auszubilden, die eine Art Versteifungsrippen bilden und den Belagträger (18, 20) gegen Biegung versteifen. Die Erfindung ermöglicht einen dünnen und damit leichten Belagträger (18, 20), der durch Tiefziehen herstellbar ist (Figur 1).

## Beschreibung

### Stand der Technik

Die Erfindung betrifft einen Reibbremsbelag für eine Scheibenbremse mit den Merkmalen des Oberbegriffs des Anspruchs 1 sowie einen Bremssattel für eine derartige Scheibenbremse mit den Merkmalen des Oberbegriffs des Anspruchs 10.

Reibbremsbeläge bekannter Scheibenbremsen sind auf plattenförmige, ebene Belagträger aufgebracht, die auf Grund ihrer Dicke biegesteif sind.

### Erläuterung und Vorteile der Erfindung

Der erfindungsgemäße Reibbremsbelag mit den Merkmalen des Anspruchs 1 weist einen Belagträger mit einer oder mehreren Versteifungen gegen Biegung auf. Die Versteifungen können nach Art von Versteifungsrippen von einer Belagträgerebene abstehen (Anspruch 2). Unter Versteifungen sind insbesondere Ausformungen aus der Belagträgerebene heraus zu verstehen, die auf Grund ihrer Form den Belagträger gegen Biegung versteifen.

Die Erfindung hat den Vorteil, dass sie einen dünnen und in Folge dessen leichten und trotzdem biegesteifen Belagträger möglich macht.

Die Unteransprüche haben vorteilhafte Ausgestaltungen und Weiterbildungen der im Anspruch 1 angegebenen Erfindung zum Gegenstand.

Der erfindungsgemäße Bremssattel mit den Merkmalen des Anspruchs 10 weist einen Reibbremsbelag mit einem Belagträger der vorstehend erläuterten Art auf. Zur Demontage des Reibbremsbelags ist eine oder sind mehrere Öffnungen zum Ansetzen eines Demontagewerkzeugs vorgesehen. Als Demontagewerkzeug lässt sich beispielsweise ein Schraubendreher durch die Öffnung zwischen den Belagträger und den Bremssattel bringen und der Reibbremsbelag mit dem Schraubendreher vom Bremssattel abheben.

### Zeichnung

Die Erfindung wird nachfolgend anhand eines in der Zeichnung dargestellten Ausführungsbeispiels näher erläutert. Es zeigen:
- Figur 1: eine perspektivische Explosionsdarstellung der Reibbremsbeläge einer Scheibenbremse gemäß der Erfindung; und
- Figur 2: einen Schnitt entlang der abgewinkelten Linie II - II in Figur 1 in anderem Maßstab.

### Beschreibung des Ausführungsbeispiels

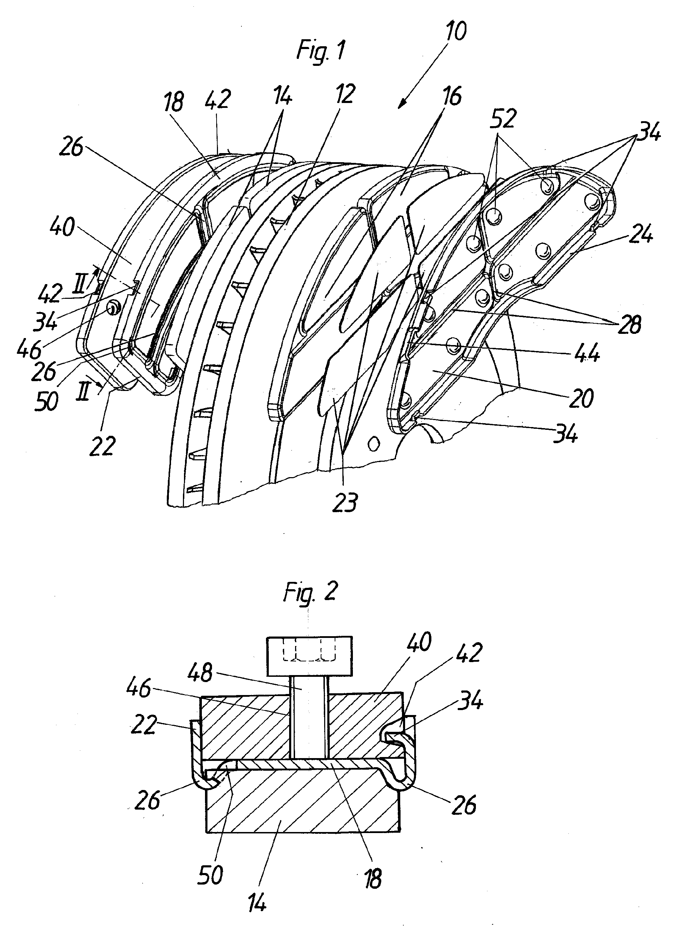

Die in der Zeichnung dargestellte erfindungsgemäße Scheibenbremse 10 weist eine Bremsscheibe 12 und zwei Reibbremsbeläge 14, 16 auf, die einander gegenüberliegend beiderseits der Bremsscheibe 10 in einem Bremssattel angeordnet sind. Der Bremssattel selbst ist der klaren Darstellung der anderen Teile der Scheibenbremse 10 wegen nicht gezeichnet. Die Reibbremsbeläge 14, 16 sind mehrteilig, sie sind auf Belagträgern 18, 20 angebracht. Zwischen den Reibbremsbelägen 14, 16 und den Belagträgern 18, 20 kann eine Zwischenlage 23 zur Verbindung der Reibbremsbeläge 14, 16 mit den Belagträgern 20 vorgesehen sein. Die Zwischenlage 23 kann mehrteilig sein. In Figur 1 ist eine vierteilige Zwischenlage 22 zwischen dem mit 16 bezeichneten Reibbremsbelag und dem mit 20 bezeichneten Belagträger dargestellt.

Die mehrteilige Ausbildung der Reibbremsbeläge 14, 16 hat den Vorteil, dass sie einfacher auf den Belagträgern 18, 20 zu befestigen sind. Hinsichtlich der Befestigung auf den Belagträgern 18, 20 wären kleine und kompakte, beispielsweise quadratische oder kreisrunde Reibbremsbeläge günstiger (nicht dargestellt). Im dargestellten und beschriebenen Ausführungsbeispiel sind wie üblich an die Kreisform der Bremsscheibe 10 angepasste, kreisbogenförmige Reibbremsbeläge 14, 16 verwendet.

Die Belagträger 18, 20 sind Umformteile, nämlich Tiefziehteile aus Blech. Sie weisen einen umlaufenden Rand 22, 24 auf, der von den Reibbremsbelägen 14, 16 weg von den Belagträgern 18, 20 abstehend umgeformt ist. Kreuzförmig zueinander verlaufende Sicken 26, 28 bilden eine Art Versteifungsrippen, die die Belagträger 18, 20 in kassettenartige Vertiefungen unterteilen. Die Ränder 22, 24 und die Sicken 26, 28 bilden Versteifungen gegen Biegung der Belagträger 18, 20. Sie ermöglichen eine Herstellung der Belagträger 18, 20 aus dünnem Material und ermöglichen eine Gewichtseinsparung. Zudem bewirken die Ränder 22, 24 und die Sicken 26, 28 einen Formschluss mit den Reibbremsbelägen 14, 16 in einer Richtung, in der sie beim Bremsen durch eine von der Bremsscheibe 12 auf die Reibbremsbeläge 14, 16 ausgeübten Reibungskraft beaufschlagt werden. Die Verbindung der Reibbremsbeläge 14, 16 mit den Belagträgern 18, 20 ist dadurch verbessert.

Die Belagträger 18, 20 weisen an ihren Rändern nach innen stehende Befestigungslaschen 34 zur Befestigung im nicht dargestellten Bremssattel auf. Wenn die Reibbremsbeläge 14, 16 in den nicht dargestellten Bremssattel eingesetzt sind, hintergreifen die Befestigungslaschen 34 komplementäre Aussparungen des Bremssattels nach Art einer Schnapp- oder Rasteinrichtung und halten dadurch die Bremsbeläge 14, 16 im Bremssattel. Die Befestigungslaschen 34 können federnd oder plastisch biegbar als Einweg-Biegelaschen ausgeführt sein. In ersterem Fall schnappen die Befestigungslaschen 34 bei der Befestigung der Reibbremsbeläge 14 elastisch federnd in die Aussparungen des Bremssattels ein und bei der Demontage wieder aus. In letzterem Fall werden die Befestigungslaschen bei der Montage der Reibbremsbeläge 14, 16 in die Aussparungen des Bremssattels hinein gebogen und müssen zur Demontage wieder heraus gebogen werden. Eine nochmalige Verwendung ist nicht vorgesehen.

Die Hinterschneidungen für den Eingriff der Befestigungslaschen 34 können außer am Bremssattel selbst auch an beweglichen Teilen des Bremssattels vorgesehen sein, beispielsweise an einem Bremskolben (nicht dargestellt). In Figur 1 ist die Befestigung des mit 14 bezeichneten Reibbremsbelags an einer Rampenplatte 40 einer mechanischen Selbstverstärkungseinrichtung vorgesehen, die an ihren Rändern Aussparungen 42 aufweist, die die Hinterschneidungen für den Hintergriff der Befestigungslaschen 34 bilden. Die Rampenplatte 40 weist an ihrer dem Reibbremsbelag 14 abgewandten, in der Zeichnung nicht sichtbaren Rückseite Rampen auf, die in Umfangsrichtung der Bremsscheibe 10 und in einem Winkel schräg zu einer Bremsscheibenebene verlaufen. Über die Rampen stützt sich die Rampenplatte 40 in Umfangsrichtung der Bremsscheibe 10 und schräg zur Bremsscheibenebene beweglich (genaugenommen ist die Rampenplatte 40 auf einer schraubenlinienförmigen, zur Bremsscheibe 12 koaxialen Bahn beweglich) im Bremssattel ab und bewirkt dadurch auf Grund des sogenannten Keilprinzips eine Bremskraftverstärkung. Dies ist an sich bekannt und soll, da es nicht den eigentlichen Gegenstand der Erfindung bildet, hier nicht näher erläutert werden. Die federnden Befestigungslaschen 34, die die Reibbremsbeläge 14, 16 nach Art von Schnappverbindungen im Bremssattel halten, ermöglichen eine einfache Montage und Demontage der Reibbremsbeläge 14, 16 im Bremssattel.

Die Belagträger 18, 20 sind in ihrer Längsrichtung, d. h. in Sekantenrichtung der Bremsscheibe 12, gewölbt, sie weisen in ihrem Mittelbereich einen größeren Abstand von der Bremsscheibe 12 auf als an ihren Enden. Die Belagträger 18, 20 können auch muldenförmig gewölbt sein. Bei der Befestigung der Reibbremsbeläge 14, 16 im Bremssattel liegen die Belagträger 18, 20 durch ihre Wölbung zuerst mit ihrem Mittelbereich an. An ihren Rändern müssen die Belagträger 18, 20 elastisch gegen den Bremssattel gedrückt werden um die Befestigungslaschen 34 in die Aussparungen des Bremssattels einschnappen oder hineinbiegen zu können. Die Belagträger 18, 20 sind dadurch mit Vorspannung und somit spiel- und klapperfrei im Bremssattel befestigt.

Auf der Seite der Reibbremsbeläge 14, 16 weisen die Sicken 26, 28 der Belagträger 18, 20 Durchbrüche 50 auf, die Hinterschneidungen bilden, die von den Reibbremsbelägen 14, 16 hintergriffen werden. Die Reibbremsbeläge 14, 16 sind dadurch formschlüssig auf den Belagträgern 18, 20 gehalten. Eine herkömmliche, stoffschlüssige Verbindung der Reibbremsbeläge 14, 16 mit den Belagträgern 18, 20 ist dadurch u. U. entbehrlich. Jedenfalls wird durch die formschlüssige Verbindung der Reibbremsbeläge 14, 16 mit den Belagträgern 18, 20 deren Verbindung miteinander verbessert. Die Zwischenlagen 23 können u. U. entfallen.
Zur Demontage der Reibbremsbeläge sind Öffnungen 44 zum Ansetzen eines Demontagewerkzeugs vorgesehen. Die Öffnungen 44 sind so angeordnet, dass das Demontagewerkzeug zwischen den Belagträgern 18, 20 und den nicht dargestellten Bremssattel bzw. das Teil des Bremssattels, an dem die Belagträger 18, 20 befestigt sind, einführbar ist. Im dargestellten und beschriebenen Ausführungsbeispiel der Erfindung wird eine Öffnung 44 zur Demontage des Reibbremsbelags 16 von einer Ausbuchtung des Randes 24 des Belagträgers 20 gebildet. Die Ausbuchtung ermöglicht das Einführen eines Schraubendrehers als Demontagewerkzeug zwischen den Belagträger und den Bremssattel, mit dem Schraubendreher lässt sich der Belagträger 20 mit dem Reibbremsbelag 16 problemlos vom Bremssattel abheben.

Eine weitere Möglichkeit zur Demontage der Reibbremsbeläge 14, 16 ist in Figur 2 für den mit 14 bezeichneten Reibbremsbelag dargestellt. Die Rampenplatte 40 ist mit einem oder mehreren Gewindelöchern 46 versehen, in die Abdrückschrauben 48 einschraubbar oder eingeschraubt sind. Mit den ben 48 einschraubbar oder eingeschraubt sind. Mit den Demontageschrauben 48 lässt sich der Reibbremsbelag 14 problemlos von der Rampenplatte 40 abheben und damit lösen. Die Abdrückschrauben 48 bilden ein Demontagewerkzeug, die Gewindelöcher 46 die Öffnungen zum Ansetzen des Demontagewerkzeugs 48. Beide erläuterte Demontagemöglichkeiten vereinfachen das Lösen der Reibbremsbeläge 14, 16 aus dem Bremssattel und damit einen Reibbremsbelagwechsel.

Die Belagträger 18, 20 weisen über ihre Fläche verteilt Sicken 52 auf, die von ihren den Reibbremsbelägen 14, 16 abgewandten Seiten abstehen. Diese Sicken 52 bilden Abstandshalter, die einen Abstand zwischen dem Bremssattel und den Belagträgern 18, 20 bewirken. Sie verringern eine Wärmeübertragung von den Reibbremsbelägen 14, 16 über die Belagträger 18, 20 auf den Bremssattel, die Bremse wird dadurch gegen Überhitzung geschützt. Unter Sicken 52 sind Auswölbungen oder dgl. der Belagträger 18, 20 zu verstehen, die die Anlage der Belagträger 18, 20 im Bremssattel auf punkt-, linienförmige oder kleinflächige Anlageflächen verkleinern und dadurch die Wärmeübertragung verringern.

## Patentansprüche

1. Reibbremsbelag für eine Scheibenbremse, wobei der Reibbremsbelag (14, 16) einen Belagträger (18, 20) aufweist, **dadurch gekennzeichnet, dass** der Belagträger (18, 20) Versteifungen (22, 24, 26, 28) gegen Biegung aufweist.

2. Reibbremsbelag nach Anspruch 1, **dadurch gekennzeichnet, dass** die Versteifungen (22, 24, 26, 28) nach Art von Versteifungsrippen von einer Belagträgerebene abstehen.

3. Reibbremsbelag nach Anspruch 2, **dadurch gekennzeichnet, dass** der Belagträger 18, 20 einen von einer Belagträgerebene abstehenden Rand (22, 24) als Versteifung gegen Biegung aufweist.

4. Reibbremsbelag nach Anspruch 2, **dadurch gekennzeichnet, dass** der Belagträger (18, 20) mindestens eine Sicke (26, 28) als Versteifung gegen Biegung aufweist.

5. Reibbremsbelag nach Anspruch 1, **dadurch gekennzeichnet, dass** die Versteifungen (22, 24, 26, 28) einen Formschluss zwischen dem Belagträger (18, 20) und dem Reibbremsbelag (14, 16) in einer Belagträgerebene mit dem Reibbremsbelag (14, 16) bilden.

6. Reibbremsbelag nach Anspruch 1, **dadurch gekennzeichnet, dass** der Belagträger (18, 20) ein Umformteil ist.

7. Reibbremsbelag nach Anspruch 1, **dadurch gekennzeichnet, dass** der Reibbremsbelag (14, 16) mehrteilig ist.

8. Reibbremsbelag nach Anspruch 1, **dadurch gekennzeichnet, dass** der Belagträger (18, 20) federnde Befestigungslaschen (34) zur Befestigung in einem Bremssattel aufweist.

9. Reibbremsbelag nach Anspruch 1, **dadurch gekennzeichnet, dass** der Belagträger (18, 20) plastisch biegbare Befestigungslaschen (34) zur Befestigung in einem Bremssattel aufweist.

10. Reibbremsbelag nach Anspruch 1, **dadurch gekennzeichnet, dass** der Belagträger (18, 20) eine Hinterschneidung (50) aufweist, die vom Reibbremsbelag (14, 16) hintergriffen wird.

11. Reibbremsbelag nach Anspruch 1, **dadurch gekennzeichnet, dass** der Belagträger (18, 20) Sicken (52) als Abstandshalter aufweist, die von einer dem Reibbremsbelag (14,16) abgewandten Seite des Belagträgers (18, 20) abstehen.

12. Reibbremsbelag nach Anspruch 1, **dadurch gekennzeichnet, dass** der Belagträger (18, 20) gewölbt ist, wobei eine dem Reibbremsbelag (14, 16) abgewandte Seite konvex ist.

13. Bremssattel für eine Scheibenbremse mit einem einen Belagträger (18, 20) aufweisenden Reibbremsbelag (14, 16), wobei der Belagträger (18, 20) eine Versteifung (22, 24, 26, 28) gegen Biegung aufweist, **dadurch gekennzeichnet, dass** der Bremssattel und / oder der Belagträger (18, 20) eine Öffnung (44, 46) zum Ansetzen eines Demontagewerkzeugs (48) aufweist.

14. Bremssattel nach Anspruch 13, **dadurch gekennzeichnet, dass** der Bremssattel ein Gewindeloch (46) zum Einschrauben einer Abdrückschraube (48) aufweist, die den Belagträger (18) mit dem Reibbremsbelag (14) vom Bremssattel abhebt.
